# EUROPÄISCHE PATENTSCHRIFT

(11) **EP 2 443 017 B1**
(45) Veröffentlichungstag und Bekanntmachung des Hinweises auf die Patenterteilung: **04.09.2013**
(21) Anmeldenummer: 10714290.3
(22) Anmeldetag: 20.04.2010
(51) Int. Cl.: B62D 15/02, B62D 6/00

(54) **VERFAHREN ZUR LENKMOMENTBEEINFLUSSUNG IN EINEM FAHRZEUGLENKSYSTEM**
METHOD FOR INFLUENCING THE STEERING TORQUE IN A VEHICLE STEERING SYSTEM
PROCÉDÉ PERMETTANT D'INFLUENCER LE COUPLE DE DIRECTION DANS UN SYSTÈME DE DIRECTION D'UN VÉHICULE

(30) Priorität: 17.06.2009 DE 102009026997
(43) Veröffentlichungstag der Anmeldung: 25.04.2012
(73) Patentinhaber: Robert Bosch GmbH, 70442 Stuttgart (DE)
(72) Erfinder: THOMYS, Adrian, Murr 71711 (DE); LESSER, Erik, Steinheim 71711 (DE)
(86) Internationale Anmeldenummer: PCT/EP2010/055179
(87) Internationale Veröffentlichungsnummer: WO 2010/145866

(56) Entgegenhaltungen:
- EP-A1- 1 508 502
- EP-A2- 1 508 493
- WO-A1-2007/138458
- DE-A1-102007 007 442
- DE-A1-102007 011 313
- DE-T2-602005 002 521

## Beschreibung

Die Erfindung bezieht sich auf ein Verfahren zur Lenkmomentbeeinflussung in einem Fahrzeuglenksystem, das mit einer Lenkkraftunterstützungseinrichtung versehen ist, über die ein Unterstützungsmoment im Lenksystem generiert werden kann.

### Stand der Technik

Aus der DE 10 2005 003 177 A1 ist es bekannt, in einem Fahrzeuglenksystem über eine Aktorik ein Gegenlenkmoment aufzubringen, falls das Fahrzeug die Sollspur verlässt, um den Fahrer dazu zu bewegen, den Lenkwinkel zu korrigieren und das Fahrzeug wieder in die Sollspur zu bringen. Zur Durchführung des Verfahrens wird zunächst mithilfe einer Kamera oder einem Radarsystem die Sollspur sowie die tatsächliche Fahrzeugparkposition relativ zur Sollspur ermittelt. Bei einer Abweichung der Fahrzeug-Istposition von der Sollspur wird zur Unterstützung des Fahrers das Gegenlenkmoment erzeugt.

Aus der DE 195 43 928 A1 ist ein Verfahren zur frühzeitigen Erkennung des Aufschwimmens eines Fahrzeugreifens auf nasser Fahrbahn bekannt, bei dem die Raddrehzahl erfasst und das Frequenzspektrum der Raddrehzahlen ausgewertet wird. Ein Aufschwimmen liegt vor, wenn durch Auswertung im Frequenzbereich festgestellt wird, dass die rotatorischen Eigenfrequenzen verstimmt sind, also von Sollwerten abweichen.

### Offenbarung der Erfindung

Aus der DE 10 2007 007 442 A1 ist es bekannt, für den Fall, dass der Fahrbahnreibwert kleiner ist als ein Schwellenwert, einen maximal zulässigen Lenkwinkel zu ermitteln, wobei mit dem Erreichen des maximalen Lenkwinkels das auf das Lenkrad einwirkende, in Richtung der Ausgangsstellung des Lenkrades wirkende Lenkmoment durch das Erzeugen eines entsprechenden Zusatzmoments stark erhöht wird. Für den Fahrer entsteht hierbei der Eindruck, das Lenkrad befinde sich an einem Anschlag, wodurch der Fahrer gehindert werden soll, das Lenkrad weiter auszulenken.

Die EP 1 508 493 A2 offenbart, durch das Einleiten eines Servomoments in das Lenksystem am Lenkrad ein gewünschtes Moment einzustellen, wobei sowohl unterstützende Momente als auch Gegenmomente möglich sind, welche der Fahrervorgabe am Lenkrad entgegengerichtet sind.

Der Erfindung liegt die Aufgabe zugrunde, die Unfallgefahr einer plötzlich auftretenden Reibwertverringerung, insbesondere im Falle von Aquaplaning zu reduzieren.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren wird in Fahrzeugen mit einem Fahrzeuglenksystem eingesetzt, das mit einer Lenkkraftunterstützungseinrichtung versehen ist. Bei der Lenkkraftunterstützungseinrichtung handelt es sich bevorzugt um einen elektrischen Servo- bzw. Stellmotor (EPS), wobei im Rahmen der Erfindung grundsätzlich auch sonstige Lenkkraftunterstützungseinrichtungen eingesetzt werden können, sofern diese in der Lage sind, ein einstellbares Unterstützungsmoment zu generieren.

Allgemein erzeugen derartige Lenkkraftunterstützungseinrichtungen ein Unterstützungsmoment, welches dem vom Fahrer über das Lenkrad vorgegebenen Handmoment überlagert wird, um die Lenkkräfte herabzusetzen, die vom Fahrer zum Steuern aufgebracht werden müssen. Erfindungsgemäß ist vorgesehen, dass die Lenkkraftunterstützungseinrichtung genutzt wird, um im Falle eines plötzlichen Reibwertabfalls die Lenkbewegung des Fahrers zu beeinflussen. Ein derartiger Abfall des Reibwerts zwischen Fahrzeugreifen und Fahrbahn tritt insbesondere im Falle von Aquaplaning auf, wenn der Reifen aufzuschwimmen beginnt und sich ein Wasserfilm zwischen einem oder mehreren Rädern und der Fahrbahn befindet. Die plötzliche Reduzierung des Reibwerts kann aber auch auf andere Bedingungen zurückzuführen sein, beispielsweise bei Eis oder Schnee auf der Fahrbahn.

Sofern diese Voraussetzungen vorliegen, wird bei der erfindungsgemäßen Funktion das in der Lenkkraftunterstützungseinrichtung generierte Moment in der Weise manipuliert, dass der Widerstand gegen eine Lenkbewegung in zumindest eine Lenkrichtung erhöht wird. Auf diese Weise wird dem Fahrer die Information vermittelt, eine Lenkbewegung in eine bevorzugte Richtung auszuführen bzw. in die entgegengesetzte Richtung zu unterlassen. Sofern der Fahrer eine Lenkbewegung beabsichtigt, die den aktuellen Gefahrenzustand erhöhen würde, insbesondere zu einer Instabilität führen würde, wird dieser Lenkrichtung ein erhöhter Widerstand entgegengesetzt. Beispielsweise ist es zweckmäßig, bei einer Aquaplaningsituation während einer Kurvenfahrt den Lenkwinkeleinschlag zumindest nicht weiter zu erhöhen, so dass durch Beaufschlagung über die Lenkkraftunterstützungseinrichtung ein erhöhter Lenkwiderstand gegen einen den Lenkwinkel erhöhenden Lenkwinkeleinschlag erzeugt wird.

Die erfindungsgemäße Funktion kann auch dazu eingesetzt werden, den Fahrer zu einer Lenkwinkelkorrektur zu bewegen. In diesem Fall wirkt das von der Lenkkraftunterstützungseinrichtung erzeugte Gegenlenkmoment bei Kurvenfahrt nicht nur einem weiteren Lenkwinkeleinschlag entgegen, sondern bleibt auch bei unverändertem Lenkwinkeleinschlag bestehen, was vom Fahrer über die Lenkhandhabe gespürt wird, so dass der Fahrer bestrebt ist, der Wirkung des Gegenlenkmoments nachzugeben, bis der gewünschte Soll-Lenkwinkel erreicht ist.

Für den Fall, dass das Fahrzeug bereits aufgrund starker reduzierter Reibung die Soll-Trajektorie verlassen hat, kann es zweckmäßig sein, die lenkbaren Räder des Fahrzeugs in die Ausgangsposition zu bringen mit Lenkwinkeleinschlag gleich null, um in möglichst kurzem Zeitraum eine signifikante Erhöhung der auf die Reifen wirkenden Kräfte zu erreichen und die Fahrbarkeit und Lenkbarkeit des Fahrzeuges wieder herzustellen. Durch eine entsprechende Gegenlenkmomentfunktion, welche über die Lenkkraftunterstützungseinrichtung aufgebracht wird, kann dem Fahrer zu diesem Fahrverhalten veranlasst werden.

Zweckmäßigerweise ist jedoch in jedem Fall die Höhe des aufgebrachten Gegenlenkmomentes begrenzt, um dem Fahrer die Möglichkeit zu lassen, das Gegenlenkmoment zu übersteuern.

Die Manipulation der Lenkkraftunterstützungseinrichtung kann auch dahin gehen, das Unterstützungsmoment, mit welchem die Lenkbewegung des Fahrers unterstützt wird, zu reduzieren. Auch in diesem Fall nimmt der Fahrer eine Änderung des von der Lenkkraftunterstützungseinrichtung erzeugten Momentes wahr, was den Fahrer zu einer Lenkwinkelkorrektur bewegen kann.

Für den Fall, dass der Ist-Lenkwinkel mit dem Soll-Lenkwinkel übereinstimmt, ist eine Korrektur durch den Fahrer nicht erforderlich. Vielmehr genügt es, das in der Lenkkraftunterstützungseinrichtung generierte Moment so einzustellen, dass lediglich im Falle einer Lenkbewegung ein erhöhter Widerstand im Lenkrad zu spüren ist, nicht jedoch bei gleichbleibendem Lenkwinkel. Zweckmäßigerweise wird dieses Gegenlenkmoment bei einer Lenkbewegung in beide Lenkrichtungen erzeugt. Das Gegenlenkmoment wird vom Fahrer nur dann gespürt, wenn der Fahrer das Lenkrad aus der aktuellen Lenkradposition in die eine oder in die andere Richtung verstellen möchte. Es handelt sich somit um ein beidseitiges Dämpfen der Lenkbewegung.

Gegebenenfalls können die verschiedenen Funktionalitäten auch miteinander kombiniert werden. So kann es zweckmäßig sein, im Falle einer nicht-korrekten Radlenkwinkelposition zunächst ein Unterstützungsmoment über die Lenkkraftunterstützungseinrichtung aufzubauen, das den Fahrer veranlasst, eine Lenkwinkelkorrektur vorzunehmen. Hierbei wird ein Unterstützungsmoment aufgebaut, welches in die gewünschte Lenkwinkelposition gerichtet ist. Sobald der gewünschte Lenkwinkeleinschlag erreicht ist, wird über die Lenkkraftunterstützungseinrichtung ein beidseitiges Moment erzeugt, das einer Auslenkung von der aktuellen Lenkradposition in beide Richtungen entgegensteht, wobei im Falle eines Beibehaltens der aktuellen Lenkwinkelposition kein oder nur ein geringes Moment über die Lenkkraftunterstützungseinrichtung erzeugt wird.

Das erfindungsgemäße Verfahren läuft zweckmäßigerweise in einem Regel- bzw. Steuergerät im Fahrzeug ab, das entweder Bestandteil des Fahrzeuglenksystems ist oder mit diesem kommuniziert.

Das Fahrzeug ist gemäß weiterer zweckmäßiger Ausführung mit einem elektronischen Stabilitätsprogramm (ESP) ausgestattet, das als Fahrerassistenzsystem in fahrdynamisch kritischen Situationen selbsttätig einen stabilisierenden Bremseingriff durchführt. Die Sensorik des ESP-Systems kann zur Durchführung des erfindungsgemäßen Verfahrens genutzt werden, insbesondere zum Feststellen, ob eine Aquaplaningsituation vorliegt.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Lenksystems in einem Fahrzeug, mit einem elektrischen Servomotor, über den ein Unterstützungsmoment im Lenksystem erzeugbar ist,
- Fig. 2: ein Ablaufdiagramm mit den einzelnen Verfahrensschritten zur Durchführung des Verfahrens.

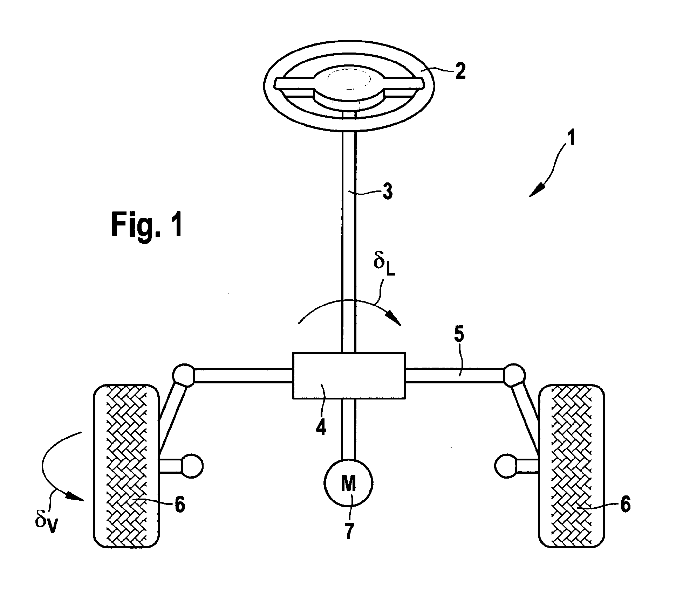

In Fig. 1 ist ein Kraftfahrzeug dargestellt, umfassend ein Lenkrad 2, eine Lenkwelle 3, ein Lenkgetriebe 4, ein Lenkgestänge 5 sowie einen elektrischen Servomotor 7 (electric power steering - EPS). Über das Lenkrad 2 gibt der Fahrer einen Lenkwinkel δ_{L} vor, der über die Lenkwelle 3 und das Getriebe 4 sowie das Lenkgestänge 5 auf die lenkbaren Vorderräder 6 übertragen wird, in denen sich ein Radlenkwinkel δ_{V} einstellt.

Zur Unterstützung des Handmomentes, welches der Fahrer auf das Lenkrad 2 ausübt, wird in dem elektrischen Servomotor 7 ein Unterstützungsmoment über das Lenkgetriebe 4 in das Lenksystem 1 eingespeist. Der Servomotor 7 ist als Elektromotor ausgeführt. Der Servomotor 7 wird über Stellsignale gesteuert, die von einem Regel- bzw. Steuergerät stammen, welches Bestandteil des Lenksystems 1 oder eines Fahrerassistenzsystems ist, beispielsweise eines ESP-Systems (elektronisches Stabilitätsprogramm).

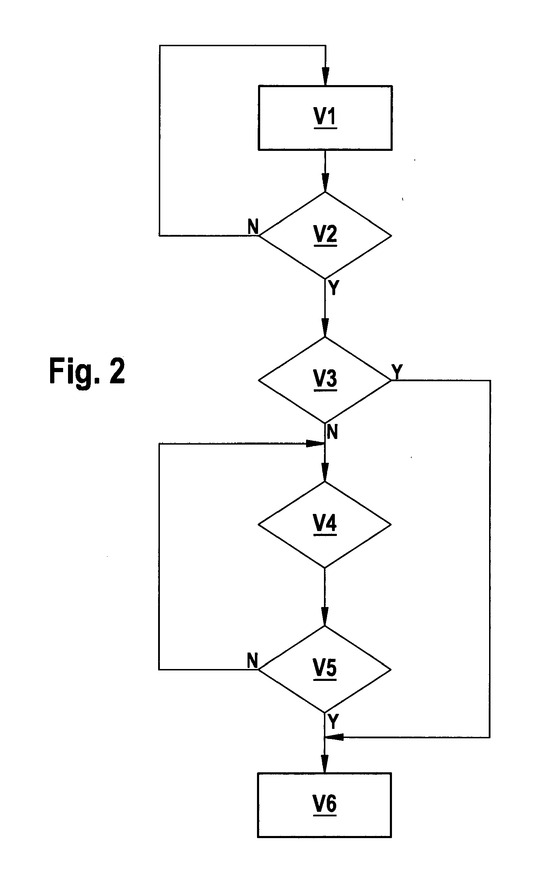

In Fig. 2 ist ein Ablaufdiagramm zur Durchführung des Verfahrens dargestellt, mit dem die Unfallgefahr bei Aquaplaning reduziert werden soll. Zunächst wird in einem ersten Verfahrensschritt V1 eine Reihe sensorisch ermittelter Daten ausgewertet, anhand derer auf eine aktuelle Aquaplaningsituation geschlossen werden kann. Diese Daten stammen vorzugsweise aus der Sensorik eines im Fahrzeug befindlichen ESP-Systems. Berücksichtigt werden können beispielsweise Radschlüpfe, Bremsdrücke sowie Fahrzeugzustandsgrößen, die die Längs- und Querdynamik des Fahrzeugs beschreiben, insbesondere Längs- und Querbeschleunigungen sowie die Gierrate. Diese Größen können gemäß eines an sich bekannten Zusammenhangs ausgewertet werden; hierbei wird eine Kenngröße ermittelt, die auf Aquaplaning hinweist. Diese Kenngröße wird im nächsten Verfahrensschritt V2 auf Vorliegen einer Aquaplaningsituation abgefragt. Sofern im Verfahrensschritt V2 festgestellt wird, dass noch keine Aquaplaningsituation vorliegt, in der der Reibwert zwischen mindestens einem Reifen des Fahrzeugs und der Fahrbahn signifikant reduziert ist, wird der Nein-Verzweigung ("N") folgend wieder zum Verfahrensschritt 1 zurückgekehrt und in zyklischen Abständen eine erneute Überprüfung durchgeführt, ob Aquaplaning vorliegt.

Sofern die Abfrage im Verfahrensschritt V2 ergibt, dass von einer Aquaplaningsituation ausgegangen werden muss, wird der Ja-Verzweigung ("Y") folgend zum nächsten Verfahrensschritt V3 fortgefahren, in welchem abgefragt wird, ob sich das Fahrzeug aktuell in einer Kurvenfahrt befindet. Dies wird anhand des Lenkwinkels überprüft, in dem abgefragt wird, ob der aktuelle Lenkwinkel gleich null ist. Sofern dies nicht der Fall ist, wird zum nächsten Verfahrensschritt V4 fortgefahren; es liegt in diesem Fall eine Kurvenfahrt vor.

Im Verfahrensschritt V4 wird durch Betätigung der Lenkkraftunterstützungseinrichtung ein einseitig wirkendes Unterstützungsmoment erzeugt, das in das Lenksystem eingespeist wird und vom Fahrer über das Lenkrad erspürt werden kann. Das Unterstützungsmoment weist in die Richtung der Lenkwinkelausgangsstellung, in der der Lenkwinkel gleich null ist. Die Unterstützung über das Unterstützungsmoment erfolgt so lange, bis der Lenkwinkel den gewünschten Sollwert einnimmt, was im Verfahrensschritt 5 abgefragt wird.

Sofern der Ist-Lenkwinkel noch nicht mit dem Soll-Lenkwinkel übereinstimmt, wird der Abfrage gemäß V5 der Nein-Verzweigung folgend wieder zum Verfahrensschritt V4 zurückgekehrt, und es wird weiterhin ein Unterstützungsmoment generiert, welches das Lenkrad in Richtung der Lenkradausgangsstellung beaufschlagt. Nach Erreichen der gewünschten Lenkwinkelposition wird der Ja-Verzweigung folgend zum nächsten Verfahrensschritt V6 fortgefahren, in welchem ein beidseitiges, dämpfendes Moment über die Lenkkraftunterstützungseinrichtung generiert wird, welches einem Lenkwinkelausschlag in beide Lenkrichtungen entgegenwirkt. Damit soll sichergestellt werden, dass der aktuelle Lenkwinkelwert beibehalten wird.

Zum Verfahrensschritt V6 gelangt man unter Umgehung der Verfahrensschritte V4 und V5 auch unmittelbar über die Abfrage gemäß Verfahrensschritt V3, falls dort festgestellt wird, dass der Lenkwinkel die Ausgangsposition einnimmt. In diesem Fall stimmt die Ist-Position des Lenkwinkels mit der Sollposition überein und es wird in der vorbeschriebenen Weise im Verfahrensschritt V6 ein die aktuelle Lenkwinkelposition erhaltendes, lediglich bei Ausschlägen wirksames Moment erzeugt.

## Patentansprüche

1. Verfahren zur Lenkmomentbeeinflussung in einem Fahrzeuglenksystem, das eine Lenkkraftunterstützungseinrichtung aufweist, bei dem für den Fall, dass der Reibwert zwischen mindestens einem Fahrzeugrad und der Fahrbahn einen Grenzwert unterschreitet, das in der Lenkkraftunterstützungseinrichtung generierte Moment in der Weise geändert wird, dass einer Lenkbewegung in zumindest einer Lenkrichtung ein erhöhter Widerstand entgegengesetzt wird, wobei das in der Lenkkraftunterstützungseinrichtung generierte Moment ein Gegenlenkmoment ist, das der Lenkbewegung entgegensteht, so dass bei Kurvenfahrt das Gegenlenkmoment einem weiteren Lenkwinkeleinschlag entgegengerichtet ist, **dadurch gekennzeichnet, dass** das Gegenlenkmoment einer Lenkwinkeländerung in beiden Lenkrichtungen entgegengerichtet ist.

2. Verfahren nach Anspruch 1, **dadurch gekennzeichnet, dass** das in der Lenkkraftunterstützungseinrichtung generierte Moment als Unterstützungslenkmoment die Lenkbewegung in einer Lenkrichtung unterstützt.

3. Verfahren nach Anspruch 1 oder 2, **dadurch gekennzeichnet, dass** das in der Lenkkraftunterstützungseinrichtung generierte Unterstützungslenkmoment bei einer Lenkbewegung in einer Lenkrichtung reduziert wird.

4. Verfahren nach einem der Ansprüche 1 bis 3, **dadurch gekennzeichnet, dass** das Verfahren im Falle von Aquaplaning durchgeführt wird.

5. Verfahren nach Anspruch 5, **dadurch gekennzeichnet, dass** das Aquaplaning in einem elektronischen Stabilitätsprogramm (ESP) im Fahrzeug festgestellt wird.

6. Regel- bzw. Steuergerät zur Durchführung des Verfahrens nach einem der Ansprüche 1 bis 5.

7. Fahrzeuglenksystem mit einem Regel- bzw. Steuergerät nach Anspruch 6.

8. Fahrzeuglenksystem nach Anspruch 7, **dadurch gekennzeichnet, dass** die Lenkkraftunterstützungseinrichtung einen elektrischen Servomotor (EPS) umfasst.

## Claims

1. Method for influencing the steering torque in a vehicle steering system, which has a steering force assistance device in which, in the event of the coefficient of friction between at least one vehicle wheel and the carriageway undershooting a limiting value, the torque which is generated in the steering force assistance device is changed in such a way that a steering movement in at least one steering direction is opposed by an increased resistance, wherein the torque which is generated in the steering force assistance device is a counter-steering torque which opposes the steering movement, with the result that during cornering the counter-steering torque is opposed to a further steering angle lock, **characterized in that** the counter-steering torque is opposed to a change in steering angle in both steering directions.

2. Method according to Claim 1, **characterized in that** the torque which is generated in the steering force assistance device assists steering movement in one steering direction as an assistance steering torque.

3. Method according to Claim 1 or 2, **characterized in that** the assistance steering torque which is generated in the steering force assistance device is reduced in the case of a steering movement in one steering direction.

4. Method according to one of Claims 1 to 3, **characterized in that** the method is carried out in the case of aquaplaning.

5. Method according to Claim 5, **characterized in that** the aquaplaning is detected in an electronic stability program (ESP) in the vehicle.

6. Closed-loop or open-loop control device for carrying out the method according to one of Claims 1 to 5.

7. Vehicle steering system having a closed-loop or open-loop control device according to Claim 6.

8. Vehicle steering system according to Claim 7, **characterized in that** the steering force assistance device comprises an electronic servomotor (EPS).

## Revendications

1. Procédé permettant d'influencer le couple de direction dans un système de direction d'un véhicule, qui présente un dispositif d'assistance à la direction dans lequel, au cas où le coefficient de friction entre au moins une roue du véhicule et la route passe en dessous d'une valeur limite, le couple généré dans le dispositif d'assistance à la direction est modifié de telle sorte qu'une résistance accrue soit opposée à un mouvement de direction dans au moins un sens de direction, le couple généré dans le dispositif d'assistance à la direction étant un couple de direction opposé qui s'oppose au mouvement de direction, de telle sorte que lors d'une conduite en virage, le couple de direction opposé soit opposé à un braquage supplémentaire de la roue, **caractérisé en ce que** le couple de direction opposé est opposé à une variation de l'angle de braquage dans les deux sens de direction.

2. Procédé selon la revendication 1, **caractérisé en ce que** le couple généré dans le dispositif d'assistance à la direction supporte en tant que couple d'assistance à la direction le mouvement de direction dans un sens de direction.

3. Procédé selon la revendication 1 ou 2, **caractérisé en ce que** le couple d'assistance à la direction généré dans le dispositif d'assistance à la direction est réduit dans le cas d'un mouvement de direction dans un sens de direction.

4. Procédé selon l'une quelconque des revendications 1 à 3, **caractérisé en ce que** le procédé est mis en oeuvre dans le cas d'aquaplaning.

5. Procédé selon la revendication 4, **caractérisé en ce que** l'aquaplaning est constaté dans le véhicule dans un programme électronique de stabilité (ESP).

6. Appareil de régulation ou de commande pour mettre en oeuvre le procédé selon l'une quelconque des revendications 1 à 5.

7. Système de direction de véhicule comprenant un appareil de régulation ou de commande selon la revendication 6.

8. Système de direction de véhicule selon la revendication 7, **caractérisé en ce que** le dispositif d'assistance à la direction comprend un servomoteur électrique (EPS).
